(19) Europäisches Patentamt
European Patent Office
Office européen des brevets

(11) **EP 2 538 567 B1**

(12) **EUROPEAN PATENT SPECIFICATION**

(45) Date of publication and mention
of the grant of the patent:
**06.09.2017 Bulletin 2017/36**

(51) Int Cl.:
*H04B 3/02* *(2006.01)*   *H04L 5/20* *(2006.01)*
*H04L 25/02* *(2006.01)*

(21) Application number: **11305770.7**

(22) Date of filing: **20.06.2011**

(54) **Coupling arrangement for phantom-mode transmission**

Kopplungsanordnung für Phantom-Modus-Übertragung

Dispositif de couplage  avec une transmission de données via un  mode fantôme

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.12.2012 Bulletin 2012/52**

(73) Proprietor: **ALCATEL LUCENT
92100 Boulogne-Billancourt (FR)**

(72) Inventors:
• **Van Den Berg, Eric
2560 Nijlen (BE)**

• **Moons, Elve
3560 Lummen (BE)**

(74) Representative: **ALU Antw Patent Attorneys
Intellectual Property and Standards
Copernicuslaan 50
2018 Antwerp (BE)**

(56) References cited:
**WO-A1-2006/075247     US-A- 6 115 468**

**Description**

**Technical Field of the Invention**

The present invention relates to phantom-mode transmission over a wired loop plant comprising a first wire pair and a second wire-pair, and more specifically to a coupling arrangement for coupling transmitters for phantom-mode transmission over the wired loop plant.

**Technical Background of the Invention**

In order to increase the achievable data rates for Digital Subscriber Line (DSL) services, multi-line ADSL modulation was presented in US patent 6507608. It describes the use of the so called phantom mode for transmission or reception of data signals. A central office equipment, such as a Digital Subscriber Line Access Multiplexer (DSLAM), provides DSL services to a subscriber over a first and a second twisted pair (also called DSL bonding), as well as over a virtual (or phantom) channel defined by the difference in common-mode voltages between the first and second twisted pairs. The first and second twisted pairs may be used for downstream communication, while upstream communications are transmitted via the phantom channel. Alternatively, all three available channels can be used for both upstream and downstream communication.

An alternative embodiment of phantom-mode transmission is described in US patent application 2006/268966. In this application the phantom mode is defined as being the differential signal between a twisted pair and a common ground. However, providing such phantom channel derived from a common ground is known to cause a large amount of egress noise and to be highly susceptible to ingress.

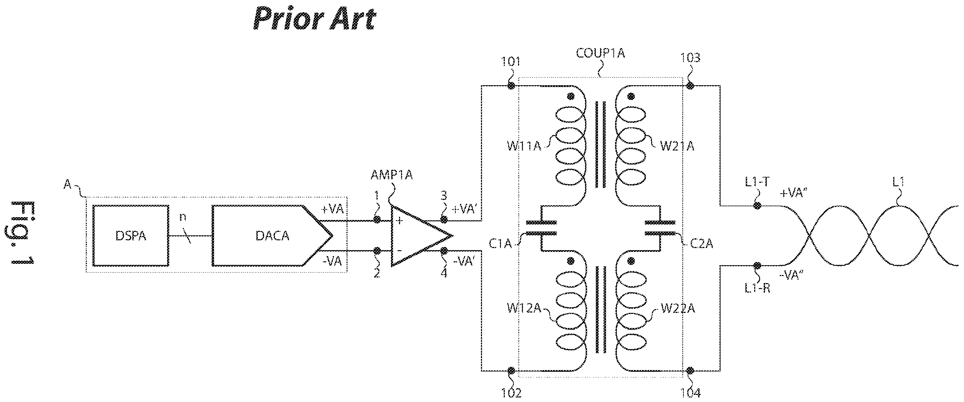

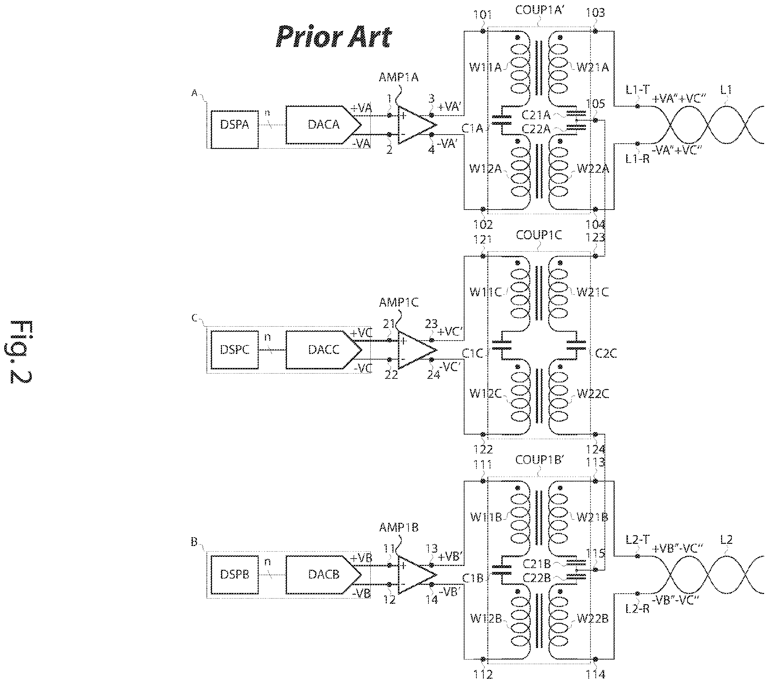

The prior art coupling arrangement for phantom-mode transmission is now described with reference to fig. 1 and 2 wherein:

- fig. 1 represents a typical coupling arrangement for coupling a transmitter to a transmission line, and
- fig. 2 represents a typical coupling arrangement for coupling three transmitters over two transmission lines using phantom-mode transmission.

There is seen in fig. 1 a typical coupling arrangement for coupling a transmitter A to a transmission line L1.

The transmitter r A comprises, as an illustrative embodiment, a Digital Signal Processor (DSP) DSPA for digitally encoding a data stream into digital data symbols to be transmitted over the line L1. The data stream is typically modulated over a plurality of carriers (or tones) by means of e.g. Quadrature Amplitude Modulation (QAM). The transmit data symbols are fed towards a Digital-to-Analog Converter (DAC) DACA as digital time-domain samples. The time-domain samples are fed through a data bus comprising n lines, with n denoting the number of bits used for quantifying the individual samples. Alternatively, the time-domain samples may be fed through one or more high-speed serial bus.

The DAC DACA converts the digital samples into an analogue differential signal comprising two complementary and fully-balanced signals denoted as +VA and -VA. The differential signal is fed to a differential amplifier AMPA with high Common Mode Rejection Ratio (CMRR) through input terminals 1 and 2. The differential amplifier AMPA amplifies the difference between the two complementary signals +VA and -VA, namely 2VA, and outputs two amplified complementary and fully-balanced signals +VA' and -VA' through output terminals 3 and 4.

The coupling unit COUP1A is a specific transformer arrangement comprising two terminals 101 and 102 coupled to the differential outputs 3 and 4 of the differential amplifier AMPA, and two terminals 103 and 104 coupled to the line L1.

The line L1 is a twisted copper pair comprising a first and second wire indistinctly referred to as the tip and the ring of the line L1, and respectively denoted as L1-T and L1-R.

The coupling unit COUP1A comprises a first primary winding W11A, a first capacitor C1A and a second primary winding W12A serially coupled between the terminals 101 and 102, and a first secondary winding W21A, a second capacitor C2A and a second secondary winding W22A serially coupled between the terminals 103 and 104. The windings W11A, W12A, W21A and W22A are magnetically coupled to each other, and have polarities as plotted in fig. 1. The primary windings W11A and W12A are matched to each other, and so are the secondary windings W21A and W22A.

The coupling unit COUP1A is primarily for passing the amplified differential signal towards the line L1, and yields two complementary and fully-balanced signals s +VA " and -VA " over the line L1.

The coupling unit COUP1A is for further isolating the transceiver circuitry from any DC component present over the line L1.

Also, any common-mode signals present on the differential amplifier output (mostly on account of component mismatches within the differential amplifier) is fully rejected by the transformer arrangement as they do not yield any current over the primary windings.

Finally, the combination of the capacitor C1A with the mutually-coupled inductors W11A/W21A and W12A/W22A and the further capacitor C2A forms a third-order high-pass filter, e.g. for filtering out any unwanted signals present in the Plain Old Telephony Service (POTS) frequency band.

There is now seen in fig. 2 a typical coupling arrangement for coupling three transmitters A, B and C over two transmission lines L1 and L2 using phantom-mode transmission.

The transmitters A and B are respectively coupled to the lines L1 and L2 as aforementioned in fig. 1 with alike reference numerals.

The coupling unit COUP1A, respectively COUP1B, has been slightly modified with the single capacitor C2A, respectively C2B, replaced by two serially-coupled matched capacitors C21A and C22A, respectively C21B and C22B, with total equivalent capacitance, and with a further r balanced connection terminal 105, respectively 115, between the two capacitors C21A and C22A, respectively C21B and C22B. The resulting coupling units are denoted as COUP1A' and COUP1B' respectively.

The third transmitter C produces two complementary and fully-balanced signal +VC and -VC to be added as common-mode signals to both the tip and the ring of lines L1 and L2 respectively. As the transformer arrangement does not pass common-mode signals (they do not yield any current in the primary windings), the terminals 123 and 124 of the coupling unit COUP1c are connected to the terminals 105 and 115 respectively, and evenly add to both the tip and the ring of the lines L1 and L2, thereby yielding +VA"+VC" and -VA"+VC" on line L1, and +VB"-VC" and -VB"-VC" on line L2.

The disclosed coupling arrangement is disadvantageous in that all those components require board space, limiting the total number of lines that can be equipped on a line termination unit, and in that the total Bill of Material (BOM) for phantom-mode transmission is increased.

An additional drawback of the known coupling arrangement is that the power consumed by the third amplifier AMP1C is equal to that of the two other amplifiers AMP1A and AMP1B.

The following background art, which may be regarded as useful for understanding the present invention and its relationship to the prior art, is further acknowledged and briefly discussed.

The us patent entitled *"Power Feed for Ethernet Telephones via Ethernet Link",* and published on September 5, 2000 with publication number US6115468, discloses an Ethernet device power transmission system including an input transformer, an output transformer and a pair of twisted pair conductors. The input transformer includes a pair of primaries for connection to a source of Ethernet data. The input transformer also includes a pair of secondaries, each having a center-tap. A first twisted pair conductor is connected across the first secondary, a second twisted pair conductor is connected across the second secondary and a DC-bias is provided between the respective center-taps of the first and second secondaries. At the local end, the output transformer includes a first and second center-tapped primary and a first and second secondary for connection to the load device. The first and second primary center-taps are connected to a power processor for extraction of DC power.

The International patent application entitled "Data, Power and Supervisory Signaling over Twisted Pairs", and published on July 20, 2006 with publication number WO2006075247 A1, discloses a further device for conveying supervisory signaling and power over the same twisted wire pairs in a cable used to carry data communications in accordance with a predetermined communications protocol. Supervisory signals having first and second differential components are generated. The first component is coupled to both wires of one of the twisted wire pairs as a common mode signal and the second component of the supervisory signal is coupled to both wires of another twisted pair as a common mode signal. The first and second components are recovered at the remote end of the cable. Physical interfaces are AC coupled to the respective twisted pairs at both ends of the cable and positive and negative voltage rails powered by a power sourcing device are coupled to predetermined twisted pairs to convey a DC voltage over the cable which may be used to power a remote electronic device.

## Summary of the Invention

It is an object of the present invention to provide a cheaper and more compact design for phantom-mode transmission.

In accordance with a first aspect of the invention, a coupling arrangement for phantom-mode transmission over a wired loop plant comprises a first coupling unit with first primary windings between a first pair of input terminals, and with first secondary windings between a first pair of output terminals to be coupled to a first wire pair, which first primary and secondary windings being magnetically coupled to each other, and a second coupling unit with second primary windings between a second pair of input terminals, and with second secondary windings between a second pair of output terminals to be coupled to a second wire pair, which second primary and secondary windings being magnetically coupled to each other.

The first coupling unit further comprises a first primary balanced connection terminal having first primary equal impedances to the first pair of input terminals, and a first secondary balanced connection terminal having first secondary equal impedances to the first pair of output terminals, and the second coupling unit further comprises a second primary balanced connection terminal having second primary equal impedances to the second pair of input terminals, and a

second secondary balanced connection terminal having second secondary equal impedances to the second pair of output terminals.

The coupling arrangement further comprises a third coupling unit with third primary windings between a third pair of input terminals, and with third secondary windings between a third pair of output terminals, which third primary and secondary windings being magnetically coupled to each other. The third pair of input terminals are respectively coupled to the first and second primary balanced connection terminals, and the third pair of output terminals are respectively coupled to the first and second secondary balanced connection terminals.

The first and second pairs of input terminals are arranged to be coupled to first and second amplification units generating first and second common-and-differential-mode signals respectively.

The European patent application 10305979, entitled "Coupling Arrangement for Phantom-mode Transmission", and filed on September 13, 2010 in the name of Alcatel-Lucent, describes a coupling arrangement that adds the common-mode signal to the complementary differential signals before the amplification stage. The coupling arrangement comprises amplifiers that individually and evenly amplifies the individual signals that respectively drives the individual wires so as both common-mode and differential-mode signals are amplified (versus differential amplifiers that only amplify the difference between their two input terminals while rejecting any common-mode signals present on both inputs). The coupling arrangement further comprises a capacitive coupling unit for coupling the amplifier outputs to the line's tip and ring.

This coupling arrangement is advantageous in that the number of lumped components used for the line drivers on the Printed Board Assembly (PBA) is reduced, thereby reducing the BOM of the line termination units, and allowing an increase of the line density per equipment.

This coupling arrangement is further advantageous in that the power consumption of the line driver stage is greatly reduced.

Nevertheless, the problem with capacitive coupling is that, if both capacitors are not exactly matched, the differential-mode signal is partly converted into a common-mode signal on the twisted pair, and similarly the common-mode signal is partly converted into a differential-mode signal. This differential-to-common-mode conversion is also known as Longitudinal Conversion Loss (LCL). LCL has a upper bound that is specified by ITU recommendations so as to avoid impacts on rate-reach performances. In addition, LCL causes increased crosstalk between the regular signal and the phantom signal.

LCL can be controlled by either making use of very well matched coupling capacitors, or by providing a feedback signal. very well matched capacitors increase system cost, and feedback control increase system complexity.

with this new coupling arrangement, the common-mode signal that is generated by the two dual line drivers forms in fact a symmetrical differential signal (+VC, -VC). This differential-mode signal can be picked up at a midpoint on the line driver outputs, fed into a transformer, and inserted as two symmetrical common mode signals onto the transmission lines that carry the regular signals.

In one embodiment of the invention, the differential signal of the first common-and-differential-mode signal corresponds to a first data signal, the differential signal of the second common-and-differential-mode signal corresponds to a second data signal, and the difference between common signals of the first and second common-and-differential-mode signals corresponds to a third data signal.

In one embodiment of the invention, the first primary equal impedances comprise a half of the first primary windings, the first secondary equal impedances comprise a half of the first secondary windings, the second primary equal impedances comprise a half of the second primary windings, and the second secondary equal impedances comprise a half of the second secondary windings.

In one embodiment of the invention, the first primary equal impedances comprise a first primary capacitor serially coupled with a half of the first primary windings, the first secondary equal impedances comprise a first secondary capacitor serially coupled with a half of the first secondary windings, the second primary equal impedances comprise a second primary capacitor serially coupled with a half of the second primary windings, and the second secondary equal impedances comprise a second secondary capacitor serially coupled with a half of the second secondary windings.

In one embodiment of the invention, the third coupling unit comprises a first half of the third primary windings, a third primary capacitor and a second half of the third primary windings serially coupled between the third pair of input terminals, and a first half of the third secondary windings, a third secondary capacitor and a second half of the third secondary windings serially coupled between the third pair of output terminals.

Further characterizing embodiments are mentioned in the appended claims.

Such a coupling arrangement would be advantageously used with a phantom-mode transmission arrangement comprising a first adder configured to add a first common signal to a first differential-mode signal from a first transmitter, thereby yielding a first common-and-differential-mode signal, and a second adder configured to add a second common signal that is complementary of the first common signal to a second differential-mode signal from a second transmitter, thereby yielding a second common-and-differential-mode signal, the difference between the first and second common signals being a third differential-mode signal from a third transmitter.

The phantom-mode transmission arrangement further comprises a first amplification unit with a first pair of input terminals to be fed with the first differential-and-common-mode signal, and configured to individually and evenly amplify input signals present on respective ones of their input terminals, thereby yielding a first amplified common-and-differential-mode signals onto a first pair of output terminals, and a second amplification unit with a second pair of input terminals to be fed with the second differential-and-common-mode signal, and configured to individually and evenly amplify input signals present on respective ones of their input terminals, thereby yielding a second amplified common-and-differential-mode signals onto a second pair of output terminals.

The first and second pairs of output terminals of the first and second amplification units feeding the first and second amplified common-and-differential-mode signals are then coupled to the first and second pairs of input terminals of the first and second coupling units of the coupling arrangement.

The first and second adders may form part of the first and second transmitters, in which case the first and second transmitters are further configured to directly output the first and second common-and-differential-mode signals.

## Brief Description of the Drawings

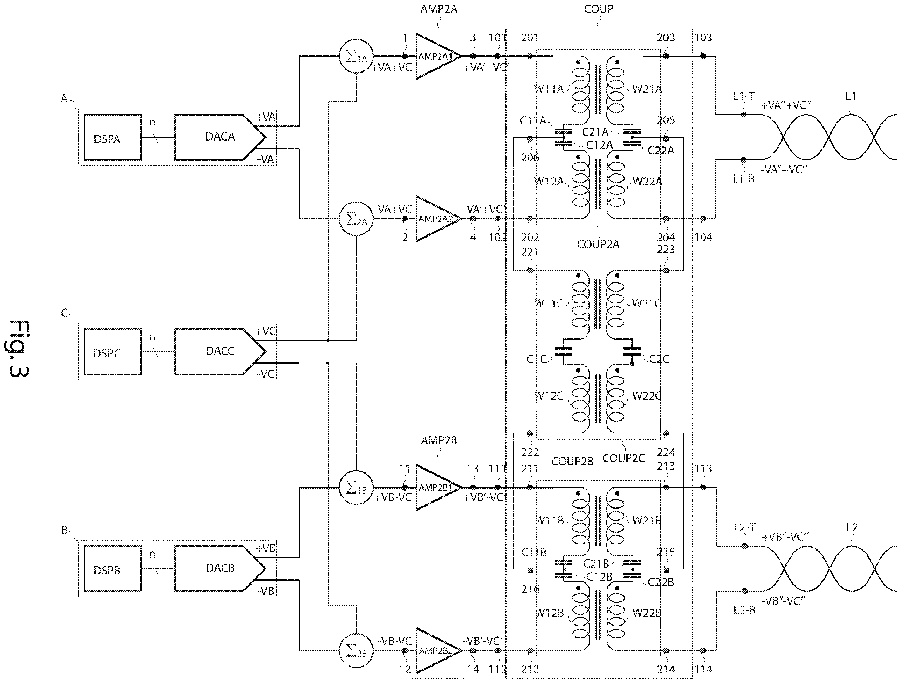

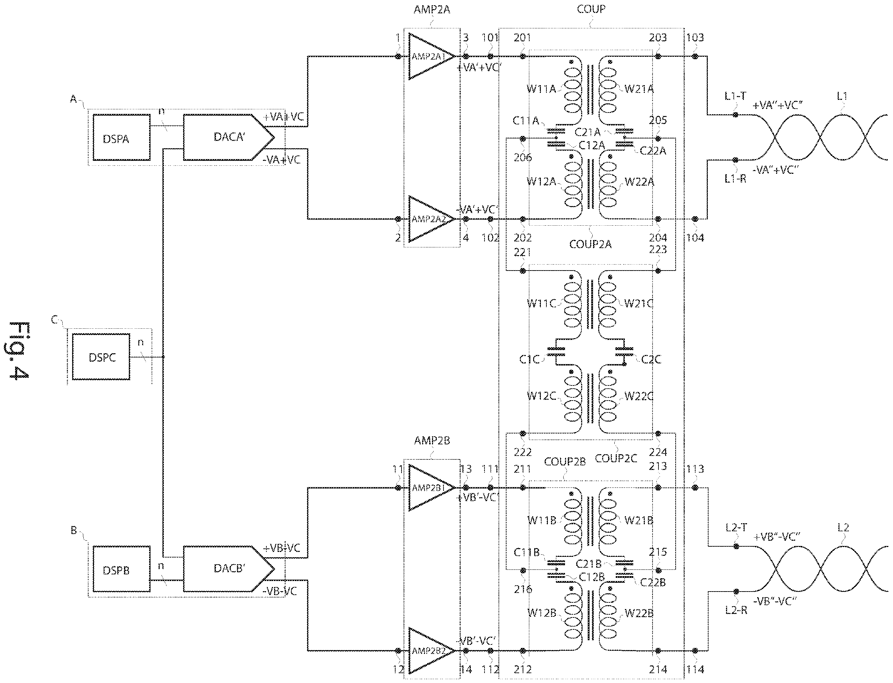

The above and other objects and features of the invention will become more apparent and the invention itself will be best understood by referring to the following description of an embodiment taken in conjunction with fig. 3 and 4, wherein:

- fig. 3 represents a first phantom-mode transmission arrangement comprising a coupling arrangement according to the invention, and
- fig. 4 represents a second phantom-mode transmission arrangement comprising a coupling arrangement according to the invention.

## Detailed Description of the Invention

There is seen in fig. 3 a first phantom-mode transmission arrangement with:

- a first transmit path for coupling a first transmitter A to a first transmission line L1,
- a second transmit path for coupling a second transmitter B to a second transmission line L2, and
- a third transmit path for coupling a third transmitter C for phantom-mode transmission over both lines L1 and L2.

The transmission arrangement may also comprise corresponding receive paths (not shown) for receiving both differential-mode and common-mode signals from the lines L1 and L2, and for feeding the received signals to respective receivers for further handling (amplifying, demodulating, decoding, etc).

The three transmitters A, B and C are shown as comprising DSPs DSPA, DSPB and DSPC respectively coupled to DACs DACA, DACB and DACC, but the present invention should not be limited to that specific embodiment and may apply indistinctly to alternative analog or digital transmitter implementations.

The transmitters A, B and C output differential-mode and fully-balanced signals $(+VA(t), -VA(t))$, $(+VB(t), -VB(t))$ and $(+VC(t), -VC(t))$ respectively onto output terminal pairs, wherein t denotes the time-dependence of the signals (the time dependence will be omitted in the following).

The transmission arrangement comprises the following functional blocks:

- four adders $\Sigma$1A, $\Sigma$2A, $\Sigma$1B and $\Sigma$2B, each with two input terminals and one output terminal,
- a first amplification unit AMP2A with two input terminals 1 and 2 and two output terminals 3 and 4,
- a second amplification unit AMP2B with two input terminals 11 and 12 and two output terminals 13 and 14, and
- a coupling arrangement COUP with four input terminals 101, 102, 111 and 112, and four output terminals 103, 104, 113 and 114.

The two output terminals of the transmitter A are coupled to an input terminal of the two adders $\Sigma$1A and $\Sigma$2A respectively. The two output terminals of the transmitter B are coupled to an input terminal of the two adders $\Sigma$1B and $\Sigma$2B respectively. The first output terminal of the transmitter C is coupled to an input terminal of the two adders $\Sigma$1A and $\Sigma$2A, and the second output terminal of the transmitter C is coupled to an input terminal of the two adders $\Sigma$1B and $\Sigma$2B.

The adders $\Sigma$1A, $\Sigma$2A, $\Sigma$1B and $\Sigma$2B are for adding together the signals present on their two input terminals, and to output the sum of the two signals onto the output terminal. Implementations of the adders $\Sigma$1A, $\Sigma$2A, $\Sigma$1B and $\Sigma$2B by means of basic electronics are well know in the art.

The output terminals of the adders $\Sigma$1A, $\Sigma$2A, $\Sigma$1B and $\Sigma$2B are respectively coupled to the input terminals 1, 2, 11 and 12 of the amplification units AMP2A and AMP2B, and output signals +VA+VC, -VA+VC, +VB-VC and -VB-VC respectively.

The output terminals 3, 4, 13 and 14 of the amplification units AMP2A and AMP2B are respectively coupled to the input terminals 101, 102, 111 and 112 of the coupling arrangement COUP. The output terminals 103 and 104 of the coupling arrangement COUP are respectively coupled to the tip L1-T and the ring L1-R of the line L1, and the output terminals 113 and 114 of the coupling arrangement COUP are respectively coupled to the tip L2-T and the ring L2-R of the line L2.

The amplification unit AMP2A and AMP2B are configured to amplify both common-mode and differential-mode signals applied to their respective pair of input terminals (1, 2) and (11, 12). This is achieved by individually amplifying each signal component with substantially the same amplification gain.

Therefore, the first amplification unit AMP2A comprises a first amplifier AMP2A1 between the input terminal 1 and the output terminal 3 for amplifying the signal +VA+VC output by the first adder $\Sigma$1A, thereby yielding +VA'+VC' as amplified signal, and a second amplifier AMP2A2 between the input terminal 2 and the output terminal 4 for amplifying the signal -VA+VC output by the second adder $\Sigma$2A, thereby yielding -VA'+VC' as amplified signal.

Similarly, the second amplification unit AMP2B comprises a third amplifier AMP2B1 between the input terminal 11 and the output terminal 13 for amplifying the signal +VB-VC output by the third adder $\Sigma$1B, thereby yielding +VB'-VC' as amplified signal, and a fourth amplifier AMP2B2 between the input terminal 12 and the output terminal 14 for amplifying the signal -VB-VC output by the fourth adder $\Sigma$2B, thereby yielding -VB'-VC' as amplified signal.

Let V1(t) and V2(t) denote any two signals, each one driving one wire of a wire pair, such as the tip or the ring of a subscriber loop.

The signals over each wire can be decomposed into a differential-mode signal vd(t) and a common-mode signal vc(t):

$$V1(t) = Vc(t) + Vd(t)/2 \quad (1)$$

$$V2(t) = Vc(t) - Vd(t)/2 \quad (2)$$

wherein:

$$Vd(t) = V1(t) - V2(t) \quad (3),$$

$$Vc(t) = \frac{V1(t) + V2(t)}{2} \quad (4).$$

Let G denote the common gain factor of the amplifiers AMP2A1, AMP2A2, AMP2B1 and AMP2B2. Let (V1c, V1d) and (V1c', V1d') denote the common-mode and differential-mode signals respectively present on the input terminal pair (1, 2) and the output terminal pair (3, 4) of the first amplification unit AMP2A. Let (V2c, V2d) and (V2c', V2d') denote the common-mode and differential-mode signals respectively present on the input terminal pair (11, 12) and the output terminal pair (13, 14) of the second amplification unit AMP2B. We have:

$$V1d = (VA + VC) - (-VA + VC) = 2 \cdot VA \quad (5),$$

$$V1c = ((VA + VC) + (-VA + VC))/2 = VC \quad (6),$$

$$V2d = (VB - VC) - (-VB - VC) = 2 \cdot VB \quad (7),$$

$$V2c = ((VB - VC) + (-VB - VC))/2 = -VC \quad (8).$$

similarly, we have:

$$V1d' = (VA' + VC') - (-VA' + VC') = 2 \cdot VA'$$
$$= G \cdot (VA + VC) - G \cdot (-VA + VC)$$
$$= G \cdot ((VA + VC) - (-VA + VC))$$
$$= G \cdot V1d$$
$$(9),$$

$$V1c' = ((VA' + VC') + (-VA' + VC'))/2 = VC'$$
$$= (G \cdot (VA + VC) + G \cdot (-VA + VC))/2$$
$$= G \cdot ((VA + VC) + (-VA + VC)/2)$$
$$= G \cdot V1c$$
$$(10),$$

$$V2d' = (VB' - VC') - (-VB' - VC') = 2 \cdot VB'$$
$$= G \cdot (VB - VC) - G \cdot (-VB - VC)$$
$$= G \cdot ((VB - VC) - (-VB - VC))$$
$$= G \cdot V2d$$
$$(11),$$

$$V2c' = ((VB' - VC') + (-VB' - VC'))/2 = -VC'$$
$$= (G \cdot (VB - VC) + G \cdot (-VB - VC))/2$$
$$= G \cdot ((VB - VC) + (-VB - VC)/2)$$
$$= G \cdot V2c$$
$$(12).$$

Thus, both common-mode and differential-mode signals present on the input terminal pairs of the amplification unit AMP2A and AMP2B are amplified with the same gain G.

The gain factors of the individual amplifiers AMP2A1, AMP2A2, AMP2B1 and AMP2B2 are not necessarily equal, e.g. on account of component mismatches, but they should match as close as possible so as to achieve high common-mode-to-differential-mode and differential-mode-to-common-mode rejection ratios.

Indeed, let G1 and G2 denote the respective gain factors of the amplifiers AMP2A1 and AMP2A2. We can write $G2 = G1 + \Delta G$, and:

$$V1d' = 2 \cdot VA' = G1 \cdot (VA + VC) - (G1 + \Delta G) \cdot (-VA + VC)$$
$$= G1 \cdot ((VA + VC) - (-VA + VC)) + \Delta G \cdot (VA - VC)$$
$$= G1 \cdot V1d + \Delta G \cdot (V1d/2 - V1c)$$
$$= (G1 + \Delta G/2) \cdot V1d - \Delta G \cdot V1c$$
$$(13),$$

$$V1c' = VC' = (G1 \cdot (VA + VC) + (G1 + \Delta G) \cdot (-VA + VC))/2$$
$$= G1 \cdot ((VA + VC) + (-VA + VC))/2 + \Delta G/2 \cdot (VC - VA)$$
$$= (G1 + \Delta G/2) \cdot V1c - \Delta G/4 \cdot V1d$$
$$(14)$$

As one can see, the differential-mode voltage V1d' output by the amplification unit AMP2A depends on both the differential-mode and common-mode input voltages. Similarly, the common-mode voltage V1c' output by the amplification unit AMP2A depends on both the common-mode and differential-mode input voltages.

consequently, one should tend to reduce $\Delta G$, i.e. the gain mismatching between the two amplifiers AMP2A1 and AMP2A2, so as to decrease the common-mode-to-differential-mode and differential-mode-to-common-mode couplings of the amplification unit AMP2A.

The same reasoning applies mutatis mutandis to the second amplification unit AMP2B.

The coupling arrangement COUP is configured for passing both common-mode and differential-mode signals from their input terminals towards their output terminals, and comprises:

- a first coupling unit COUP2A with two input terminals 201 and 202 and two output terminals 203 and 204,
- a second coupling unit COUP2B with two input terminals 211 and 212 and two output terminals 213 and 214, and
- a third coupling unit COUP2C with two input terminals 221 and 222 and two output terminals 223 and 224.

The input terminals 201, 202, 211 and 212 of the coupling units COUP2A and COUP2B are respectively coupled to the input terminals 101, 102, 111 and 112 of the coupling arrangement COUP. The output terminals 203, 204, 213 and 214 of the coupling units COUP2A and COUP2B are respectively coupled to the output terminals 103, 104, 113 and 114 of the coupling arrangement COUP.

The coupling unit COUP2A comprises first primary windings W11A, a first primary capacitor C11A, a second primary capacitor C12A and second primary windings W12A serially coupled between the terminals 201 and 202, and first secondary windings W21A, a first secondary capacitor C21A, a second secondary capacitor C22A and second secondary windings W22A serially coupled between the terminals 203 and 204. The windings W11A, W12A, W21A and W22A are magnetically coupled to each other, and have polarities as plotted in fig. 3. The inductances of the primary windings W11A and W12A are substantially matched to each other, and so are the inductances of secondary windings W21A and W22A. The capacitances of the primary capacitors C11A and C12A are substantially matched to each other, and so are the capacitances of the secondary capacitors C21A and C22A. The combination of the capacitors C11A and C12A with the mutually-coupled inductors W11A/W21A and W12A/W22A and the further capacitors C21A and C22A forms a third-order high-pass filter.

A primary fully-balanced connection terminal 206 is provided between the primary capacitors C11A and C12A, and a secondary fully-balanced connection terminal 205 is provided between the secondary capacitors C21A and C22A. The primary connection terminal 206 has equal impedances to the input terminals 201 and 202, meaning that the impedance between the terminals 206 and 201 substantially matches the impedance between the terminals 206 and 202, at least in the frequency range of interest. Similarly, the secondary connection terminal 205 has equal impedances to the output terminals 203 and 204. Furthermore, the input terminals 201 and 202 have also equal impedances to the ground, and so do the output terminals 203 and 204.

The coupling unit COUP2B comprises first primary windings W11B, a first primary capacitor C11B, a second primary capacitor C12B and second primary windings W12B serially coupled between the terminals 211 and 212, and first secondary windings W21B, a first secondary capacitor C21B, a second secondary capacitor C22B and second secondary windings W22B serially coupled between the terminals 213 and 214. The windings W11B, W12B, W21B and W22B are magnetically coupled to each other, and have polarities as plotted in fig. 3. The inductances of the primary windings W11B and W12B are substantially matched to each other, and so are the inductances of secondary windings W21B and W22B. The capacitances of the primary capacitors C11B and C12B are substantially matched to each other, and so are the capacitances of the secondary capacitors C21B and C22B. The combination of the capacitors C11B and C12B with the mutually-coupled inductors W11B/W21B and W12B/W22B and the further capacitors C21B and C22B forms a third-order high-pass filter.

A primary fully-balanced connection terminal 216 is provided between the primary capacitors C11B and C12B, and a secondary fully-balanced connection terminal 215 is provided between the secondary capacitors C21A and C22A. The primary connection terminal 216 has equal impedances to the input terminals 211 and 212, and the secondary connection terminal 215 has equal impedances to the output terminals 213 and 214. Furthermore, the input terminals 211 and 212 have also equal impedances to the ground, and so do the output terminals 213 and 214.

The first coupling unit COUP2A rejects the common-mode component +VC' present in the common-and-differential-mode signal (+VA'+VC', -VA'+VC') as the common-mode component +VC' yields opposite and equal currents through the primary windings W11A and W12A with opposite magnetic flux canceling each other on account of the windings polarities. Thus, the first coupling unit COUP2A only passes a filtered differential-mode signal (+VA" , -VA" ) to the output terminals 203 and 204.

Similarly, the second coupling unit COUP2B rejects the common-mode component present -VC' present in the common-and-differential-mode signal (+VB'-VC', -VB'-VC') as the common-mode component -VC' yields opposite and equal currents through the primary windings W11B and W12B with opposite magnetic flux canceling each other on account of the windings polarization. Thus, the second coupling unit COUP2B only passes a filtered differential-mode signal (+VB" , -VB") to the output terminals 213 and 214.

The coupling unit COUP2A and COUP2B further isolate the transceiver circuitry from any DC component present over the lines L1 and L2.

The third coupling unit COUP2C comprises first primary windings W11C, a primary capacitor C1C and second primary windings W12C serially coupled between the terminals 221 and 222, and first secondary windings W21C, a secondary capacitor C2C and second secondary windings W22C serially coupled between the terminals 223 and 224. The windings W11C, W12C, W21C and W22C are magnetically coupled to each other, and have polarities as plotted in fig. 3. The inductances of the primary windings W11C and W12C are substantially matched to each other, and so are the inductances of the secondary windings W21C and W22C. The combination of the capacitor C1C with the mutually-coupled inductors W11C/W21C and W12C/W22C and the further capacitor C2C forms a third-order high-pass filter.

The input terminals 221 and 222 of the coupling unit COUP2C are coupled to the primary balanced connection terminals 206 and 216 respectively. The output terminals 223 and 224 of the coupling unit COUP2C are coupled to the secondary balanced connection terminals 205 and 215 respectively.

As the terminals 201 and 202 have almost-zero common-mode impedances to the terminal 206, voltage at terminal 206 closely follows the common voltage +VC'. Similarly, voltage at terminal 216 closely follows the complementary common signal -VC'. Thus, the input terminals 221 and 222 of the coupling unit COUP2C are driven with a differential-mode signal (+VC', -VC'), and the coupling unit COUP2C passes a filtered differential-mode signal (+VC" , -VC") to the output terminals 223 and 224. These two complementary signals are then re-injected at the outputs of the first and second coupling units COUP2A and COUP2B by means of the balanced secondary connection terminals 205 and 215. Thus, +VC " evenly adds to both the tip and the ring of the line L1, thereby yielding +VA"+VC" and -VA"+VC" voltages over the line L1, and -VC" evenly adds to both the tip and the ring of the line L2, thereby yielding +VB " -VC " and -VB " -VC " voltages over the line L2.

Additional components, such as resistors and/or capacitors and/or inductors, can be added to the capacitors C11A, C12A, C21A and C22A of the first coupling unit COUP2A, and/or to the capacitors C11B, C12B, C21B and C22B of the second coupling unit COUP2B, and/or to the capacitors C1C and C2C of the third coupling unit COUP2C, so as for instance to improve the filter characteristics, i.e. to design a fifth-order (or higher-order) high-pass filter for filtering out any unwanted low-frequency signal because of non-linearity in e.g. the amplification units AMP2A and AMP2B.

Common-mode-to-differential-mode and differential-mode-to-common-mode couplings no longer exist in the final coupling stage COUP as it does with the pure capacitive coupling described in EP10305979 application (on account of capacitance mismatch).

The impairments of the amplification units AMP2A and AMP2B can be dealt with by careful hardware design with perfectly matched components, and/or by means of a feedback loop or compensation circuit.

That part of the phantom channel signal that ultimately leaks into the regular channel on account of the aforementioned common-mode-to-differential-mode and differential-mode-to-common-mode couplings can be further canceled by signal precoding or signal post-processing. A method for crosstalk cancellation between the regular and phantom channels is described in European patent application 2091196 entitled "Method and Apparatus for DSL communication", filed in the name of Alcatel-Lucent on February 13, 2008, and published on August 19, 2009.

The capacitors C11A, C12A, C21A and C22A of the first coupling unit COUP2A are optional, and so are the capacitors C11B, C12B, C21B and C22B of the second coupling unit COUP2B, and so are the capacitors C1C and C2C of the third coupling units COUP2C. Indeed, a high-pass filter can be implemented somewhere else along the transmit and receive path, for instance in the digital domain, or within the amplification units. If so, the two primary or secondary windings may form a single coil.

Also, a DC-blocking capacitor might be serially coupled with the tip and/or the ring of a line so as to block any DC component present over the line. If so, the secondary balanced connection terminals may not have equal impedance to the tip and ring of the line, yet they do have equal impedance in the frequency range of interest, that is to say the frequency band used by the regular and phantom-mode signals.

There is seen in fig. 4 a second embodiment of a phantom-mode transmission arrangement, wherein the adders Σ1A, Σ2A, Σ1B and Σ2B have been advantageously moved within the transmitters A and B, and more specifically within the DACs DACA and DACB. The DAC of the transmitter C is no longer needed and can be taken out from the PBA, thereby saving extra space and cost.

More specifically, the DAC DACA comprises two input terminals and two output terminals, with a first input terminal coupled to DSPA's output and fed with first digital samples to be output as differential-mode signal on the output terminal pair, and a second input terminal coupled to DSPC's output and fed with second digital samples to be output as common-mode signal on the output terminal pair.

Similarly, the DAC DACB comprises two input terminals and two output terminals, with a first input terminal coupled to DSPB's output and fed with first digital samples to be output as differential-mode signal on the output terminal pair, and a second input terminal coupled to DSPC's output and fed with second digital samples to be inverted and output as common-mode signal on the output terminal pair.

In this embodiment, the DAC DACA is configured to produce two complementary digital signals from first samples, namely +VA and -VA, and to add second digital samples namely +VC, to each complementary digital signals before analog-to-digital conversion, thereby yielding an unbalanced and asymmetrical signal on the output terminal pair, namely +VA+VC and -VA+VC.

Similarly, the DAC DACB is configured to produce two complementary digital signals from first samples, namely +VB and -VB, and to invert and add second digital samples, namely -VC, to each complementary digital signals before analog-to-digital conversion, thereby yielding an unbalanced and asymmetrical signal on the output terminal pair, namely +VB-VC and -VB-VC.

The amplification units AMP2A and AMP2B and the coupling arrangement COUP are left unchanged.

Prior art solutions use a complete transmission channel (DSPC processor, DACC converter and AMP1C amplifier in fig. 2) for placing the differential signal as two complementary common-mode signals (+VC', -VC'), one on each twisted pair (L1 and L2).

These components consume power. Reducing the number of amplifiers and DACs, as per the invention, saves power.

The power saving achieved by reducing the number of amplifiers from 3 down to 2 (elimination of AMP1C) does however not save 33% of the power consumed by the amplifiers. The two remaining amplifiers (AMP1A and AMP1B) generating both the differential-mode and common-mode mode signals need to output more power and hence consume more power. For DSL applications, the supply voltage of a line driver must be sufficiently high to deliver crest peaks up to 5 or 6 times the Root Mean Square (RMS) power. These crest peaks are very rare, and probability that they will occur simultaneously on the differential channel ((+VA',-VA') or (VB',-VB')) and the phantom channel ((+VC',-VC')) can be ignored in function of the desired Bit Error Rate (BER). The power supply of an amplifier outputting both differential-mode and common-mode signals can therefore be limited to the supply voltage required to generate the sum of the RMS powers plus e.g. one crest peak. This would be around 120% of the supply voltage that would be required for a differential-mode signal only, and would yield a power reduction of minimum 20% for the amplifier section only. Also, a further power reduction can be achieved by eliminating the third DAC (DACC) as shown in the embodiment of fig. 4.

A coupling arrangement according to the invention typically forms part of a line termination unit, which is a piece of equipment whereat transmission lines from subscriber premises terminate. This piece of equipment forms part of an access node for providing network access to subscribers. Examples of access nodes are a DSLAM, an Ethernet access bridge, an IP access or edge router, etc. The access node may reside at a central location (e.g., a central office), or at a remote location closer to subscriber premises (e.g., a street cabinet)

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

**Claims**

1. **A coupling arrangement** (coup) for phantom-mode transmission over **a wired loop plant,** and comprising:

> - **a first coupling unit** (COUP2A) with **first primary windings** (W11A, W12A) between **a first pair of input terminals** (201, 202), and with **first secondary windings** (W21A, W22A) between **a first pair of output terminals** (203, 204) to be coupled to a **first wire pair** (L1), which first primary and secondary windings being magnetically coupled to each other,
> - **a second coupling unit** (COUP2B) with **second primary windings** (W11B, W12B) between **a second pair of input** terminals (211, 212), and with **second secondary windings** (W21B, W22B) between **a second pair of output terminals** (213, 214) to be coupled to **a second wire pair** (L2), which second primary and secondary windings being magnetically coupled to each other,

> *wherein* said first coupling unit further comprises **a first primary balanced connection terminal** (206) having **first primary equal impedances** to said first pair of input terminals, and **a first secondary balanced connection**

terminal (205) having **first secondary equal impedances** to said first pair of output terminals,

*wherein* said second coupling unit further comprises **a second primary balanced connection terminal** (216) having **second primary equal impedances** to said second pair of input terminals, and a **second secondary balanced connection terminal** (215) having **second secondary equal impedances** to said second pair of output terminals,

*wherein* said coupling arrangement further comprises **a third coupling unit** (COUP2C) with **third primary windings** (W11C, W12c) between **a third pair of input terminals** (221, 222), and with **third secondary windings** (W21C, W22C) between **a third pair of output terminals** (223, 224), which third primary and secondary windings being magnetically coupled to each other,

*wherein* said third pair of input terminals are respectively coupled to said first and second primary balanced connection terminals, and said third pair of output terminals are respectively coupled to said first and second secondary balanced connection terminals,

*and wherein* said first and second pairs of input terminals are arranged to be coupled to **first and second amplification units** (AMP2A, AMP2B) generating f**irst and second common-and-differential-mode signals** ((+VA+VC, -VA+VC); (+VB-VC, -VB-VC)) respectively.

2. **A coupling arrangement** (COUP) according to claim *1, wherein* the differential signal of said first common-and-differential-mode signal corresponds to **a first data signal**, the differential signal of said second common-and-differential-mode signal corresponds to **a second data signal,** and the difference between common signals of said first and second common-and-differential-mode signals corresponds to **a third data signal.**

3. **A coupling arrangement** (COUP) according to claim 1 or 2, *wherein* said first primary equal impedances comprise **a half of said first primary windings** (W11A; W12A), said first secondary equal impedances comprise **a half of said first secondary windings** (W21A; W22A), said second primary equal impedances comprise **a half of said second primary windings** (W11B; W12B) , and said second secondary equal impedances comprise **a half of said second secondary windings** (W21B; W22B).

4. **A coupling arrangement** (COUP) according to claim 1 or 2, *wherein* said first primary equal impedances comprise **a first primary capacitor** (C11A; C12A) serially coupled with **a half of said first primary windings** W11A; W12A), said first secondary equal impedances comprise **a first secondary capacitor** C21A; C22A) serially coupled with **a half of said first secondary windings** W21A; W22A) , said second primary equal impedances comprise **a second primary capacitor** C11B; C12B) serially coupled with **a half of said second primary windings** W11B; W12B), and said second secondary equal impedances comprise **a second secondary capacitor** (C21B; C22B) serially coupled with **a half of said second secondary windings** (W21B; w22B) .

5. **A coupling arrangement** (COUP) according to any of claims 1 to 4, *wherein* said third coupling unit comprises a **first half of said third primary windings** (W11C), **a third primary capacitor** (C1C) and **a second half of said third primary windings** (W12C) serially coupled between said third pair of input terminals, and **a first half of said third secondary windings** (W21C), **a third secondary capacitor** (C2C) and **a second half of said third secondary windings** (W22C) serially coupled between said third pair of output terminals.

6. **A line termination unit** including **a coupling arrangement** (COUP) according to any of claims 1 to 5.

7. **An access node** including **a coupling arrangement** (COUP) according to any of claims 1 to 5.

**Patentansprüche**

1. Kopplungsanordnung (COUP) zur Phantom-Modus-Übertragung über eine verdrahtete Schleifenanlage und umfassend:

- eine erste Kopplungseinheit (COUP2A) mit ersten Hauptwicklungen (W11A, W12A) zwischen einem ersten Paar von Eingangsendgeräten (201, 202) und mit ersten Nebenwicklungen (W21A, W22A) zwischen einem ersten Paar von Ausgangsendgeräten (203, 204), die an ein erstes Drahtpaar (L1) zu koppeln sind, wobei die ersten Haupt- und Nebenwicklungen magnetisch aneinander gekoppelt sind,

- eine zweite Kopplungseinheit (COUP2B) mit zweiten Hauptwicklungen (W11B, W12B) zwischen einem zweiten Paar von Eingangsendgeräten (211, 212) und mit zweiten Nebenwicklungen (W21B, W22B) zwischen einem zweiten Paar von Ausgangsendgeräten (213, 214), die an ein zweites Drahtpaar (L2) zu koppeln sind, wobei die zweiten Haupt- und Nebenwicklungen magnetisch aneinander gekoppelt sind,

wobei die besagte erste Kopplungseinheit weiterhin ein erstes ausgeglichenes Hauptverbindungsendgerät (206) mit ersten gleichen Hauptimpedanzen zu dem besagten ersten Paar von Eingangsendgeräten und ein erstes ausgeglichenes Nebenverbindungsendgerät (205) mit ersten gleichen Nebenimpedanzen zu dem besagten ersten Paar von Ausgangsendgeräten umfasst,

*wobei* die besagte zweite Kopplungseinheit weiterhin ein zweites ausgeglichenes Hauptverbindungsendgerät (216) mit zweiten gleichen Hauptimpedanzen zu dem besagten zweiten Paar von Eingangsendgeräten und ein zweites ausgeglichenes Nebenverbindungsendgerät (215) mit zweiten gleichen Nebenimpedanzen zu dem besagten zweiten Paar von Ausgangsendgeräten umfasst,

*wobei* die besagte Kopplungsanordnung weiterhin eine dritte Kopplungseinheit (COUP2C) mit dritten Hauptwicklungen (W11C, W12C) zwischen einem dritten Paar von Eingangsendgeräten (221, 222) und mit dritten Nebenwicklungen (W21C, W22C) zwischen einem dritten Paar von Ausgangsendgeräten (223, 224) umfasst, wobei die dritten Haupt- und Nebenwicklungen magnetisch aneinander gekoppelt sind,

wobei das besagte dritte Paar von Eingangsendgeräten jeweils an das besagte erste und zweite ausgeglichene Hauptverbindungsendgerät gekoppelt ist, und das besagte dritte Paar von Ausgangsendgeräten jeweils an das besagte erste und zweite ausgeglichene Nebenverbindungsendgerät gekoppelt ist,

und wobei das besagte erste und zweite Paar von Eingangsendgeräten angeordnet ist, um an erste und zweite Verstärkungseinheiten (AMP2A, AMP2B) gekoppelt zu werden, die jeweils erste und zweite Signale im Gleichtakt- und-Gegentakt-Modus ((+VA+VC, -VA+VC); (+VB-VC, -VB-VC)) erzeugen.

2. Kopplungsanordnung (COUP) nach Anspruch 1, *wobei* das Gegentaktsignal des besagten ersten Signals im Gleichtakt-und-Gegentaktmodus einem ersten Datensignal entspricht, das Gegentaktsignal des besagten zweiten Signals im Gleichtakt-und-Gegentaktmodus einem zweiten Datensignal entspricht, und die Differenz zwischen Gleichtaktsignalen der besagten ersten und zweiten Signale im Gleichtakt-und-Gegentaktmodus einem dritten Datensignal entspricht.

3. Kopplungsanordnung (COUP) nach Anspruch 1 oder 2, *wobei* die besagten ersten gleichen Hauptimpedanzen eine Hälfte der besagten ersten Hauptwicklungen (W11A; W12A) umfassen, die besagten ersten gleichen Nebenimpedanzen eine Hälfte der besagten ersten Nebenwicklungen (W21A; W22A) umfassen, die besagten zweiten gleichen Hauptimpedanzen eine Hälfte der besagten zweiten Hauptwicklungen (W11B; W12B) umfassen, und die besagten zweiten gleichen Nebenimpedanzen eine Hälfte der besagten zweiten Nebenwicklungen (W21B; W22B) umfassen.

4. Kopplungsanordnung (COUP) nach Anspruch 1 oder 2, *wobei* die besagten ersten gleichen Hauptimpedanzen einen ersten Hauptkondensator (C11A; C12A) umfassen, der seriell an eine Hälfte der besagten ersten Hauptwicklungen (W11A; W12A) gekoppelt ist, die besagten ersten gleichen Nebenimpedanzen einen ersten Nebenkondensator (C21A; C22A) umfassen, der seriell an eine Hälfte der besagten ersten Nebenwicklungen (W21A; W22A) gekoppelt ist, die besagten zweiten gleichen Hauptimpedanzen einen zweiten Hauptkondensator (C11B; C12B) umfassen, der seriell an eine Hälfte der besagten zweiten Hauptwicklungen (W11B; W12B) gekoppelt ist, und die besagten zweiten gleichen Nebenimpedanzen einen zweiten Nebenkondensator (C21B; C22B) umfassen, der seriell an eine Hälfte der besagten zweiten Nebenwicklungen (W21B; W22B) gekoppelt ist.

5. Kopplungsanordnung (COUP) nach einem beliebigen der Ansprüche 1 bis 4, *wobei* die besagte dritte Kopplungseinheit eine erste Hälfte der besagten dritten Hauptwicklungen (W11C), einen dritten Hauptkondensator (C1C) und eine zweite Hälfte der besagten dritten Hauptwicklungen (W12C), die seriell zwischen dem besagten dritten Paar von Eingangsendgeräten gekoppelt sind, und eine erste Hälfte der besagten dritten Nebenwicklungen (W21C), einen dritten Nebenkondensator (C2C) und eine zweite Hälfte der besagten dritten Nebenwicklungen (W22C), die seriell zwischen dem besagten dritten Paar von Ausgangsendgeräten gekoppelt sind, umfasst.

6. Leitungsabschlusseinheit mit einer Kopplungsanordnung (COUP) nach einem beliebigen der Ansprüche 1 bis 5.

7. Zugangsknoten mit einer Kopplungsanordnung (COUP) nach einem beliebigen der Ansprüche 1 bis 5.

**Revendications**

1. Dispositif de couplage (COUP) pour une transmission en mode fantôme sur une installation en boucle filaire, et comprenant :

- une première unité de couplage (COUP2A) avec des premiers enroulements primaires (W11A, W12A) entre une première paire de bornes d'entrée (201, 202), et avec des premiers enroulements secondaires (W21A, W22A) entre une première paire de bornes de sortie (203, 204) à coupler à une première paire de conducteurs (L1), lesdits premiers enroulements primaires et secondaires étant couplés magnétiquement les uns aux autres,
- une deuxième unité de couplage (COUP2B) avec des deuxièmes enroulements primaires (W11B, W12B) entre une deuxième paire de bornes d'entrée (211, 212), et avec des deuxièmes enroulements secondaires (W21B, W22B) entre une deuxième paire de bornes de sortie (213, 214) à coupler à une deuxième paire de conducteurs (L2), lesdits deuxièmes enroulements primaires et secondaires étant couplés magnétiquement les uns aux autres,

dans lequel ladite première unité de couplage comprend en outre une première borne de connexion équilibrée primaire (206) ayant des premières impédances égales primaires par rapport à ladite première paire de bornes d'entrée, et une première borne de connexion équilibrée secondaire (205) ayant des premières impédances égales secondaires par rapport à ladite première paire de bornes de sortie,

dans lequel ladite deuxième unité de couplage comprend en outre une deuxième borne de connexion équilibrée primaire (216) ayant des deuxièmes impédances égales primaires par rapport à ladite deuxième paire de bornes d'entrée, et une deuxième borne de connexion équilibrée secondaire (215) ayant des deuxièmes impédances égales secondaires par rapport à ladite deuxième paire de bornes de sortie,

dans lequel ledit dispositif de couplage comprend en outre une troisième unité de couplage (COUP2C) avec des troisièmes enroulements primaires (W11c, W12c) entre une troisième paire de bornes d'entrée (221, 222), et avec des troisièmes enroulements secondaires (W21C, W22C) entre une troisième paire de bornes de sortie (223, 224), lesdits troisièmes enroulements primaires et secondaires étant couplés magnétiquement les uns aux autres,

dans lequel ladite troisième paire de bornes d'entrée est couplée respectivement auxdites première et deuxième bornes de connexion équilibrées primaires, et ladite troisième paire de bornes de sortie est couplée respectivement auxdites première et deuxième bornes de connexion équilibrées secondaires,

et dans lequel lesdites première et deuxième paires de bornes d'entrée sont agencées pour être couplées aux première et deuxième unités d'amplification (AMP2A, AMP2B) générant des premier et deuxième signaux de mode commun et différentiel ((+VA+VC, -VA+VC) ; (+VB-VC, -VB-VC)) respectivement.

2. Dispositif de couplage (COUP) selon la revendication 1, dans lequel le signal différentiel dudit premier signal de mode commun et différentiel correspond à un premier signal de données, le signal différentiel dudit deuxième signal de mode commun et différentiel correspond à un deuxième signal de données, et la différence entre des signaux communs desdits premier et deuxième signaux de mode commun et différentiel correspond à un troisième signal de données.

3. Dispositif de couplage (COUP) selon la revendication 1 ou 2, dans lequel lesdites premières impédances égales primaires comprennent une moitié desdits premiers enroulements primaires (W11A ; W12A), lesdites premières impédances égales secondaires comprennent une moitié desdits premiers enroulements secondaires (W21A ; W22A), lesdites deuxièmes impédances égales primaires comprennent une moitié desdits deuxièmes enroulements primaires (W11B ; W12B), et lesdites deuxièmes impédances égales secondaires comprennent une moitié desdits deuxièmes enroulements secondaires (W21B ; W22B).

4. Dispositif de couplage (COUP) selon la revendication 1 ou 2, dans lequel lesdites premières impédances égales primaires comprennent un premier condensateur primaire (C11A; C12A) couplé en série à une moitié desdits premiers enroulements primaires (W11A; W12A), lesdites premières impédances égales secondaires comprennent un premier condensateur secondaire (C21A ; C22A) couplé en série à une moitié desdits premiers enroulements secondaires (W21A; W22A), lesdites deuxièmes impédances égales primaires comprennent un deuxième condensateur primaire (C11B ; C12B) couplé en série à une moitié desdits deuxièmes enroulements primaires (W11B ; W12B), et lesdites deuxièmes impédances égales secondaires comprennent un deuxième condensateur secondaire (C21B ; C22B) couplé en série à une moitié desdits deuxièmes enroulements secondaires (W21B ; W22B).

5. Dispositif de couplage (COUP) selon l'une quelconque des revendications 1 à 4, dans lequel ladite troisième unité de couplage comprend une première moitié desdits troisièmes enroulements primaires (W11c), un troisième condensateur primaire (C1C) et une deuxième moitié desdits troisièmes enroulements primaires (W12C) couplés en série entre ladite troisième paire de bornes d'entrée, et une première moitié desdits troisièmes enroulements secondaires (w21c), un troisième condensateur secondaire (C2C) et une deuxième moitié desdits troisièmes enroulements secondaires (W22C) couplés en série entre ladite troisième paire de bornes de sortie.

6. Unité de terminaison de ligne comprenant un dispositif de couplage (COUP) selon l'une quelconque des revendications 1 à 5.

7. Noeud d'accès comprenant un dispositif de couplage (COUP) selon l'une quelconque des revendications 1 à 5.

*Prior Art*

Fig. 1

Fig.2

Fig. 3

Fig.4

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6507608 B
- US 2006268966 A
- US 6115468 A
- WO 2006075247 A1
- EP 10305979 A
- EP 2091196 A